# EUROPÄISCHE PATENTSCHRIFT

(11) **EP 2 621 933 B1**
(45) Veröffentlichungstag und Bekanntmachung des Hinweises auf die Patenterteilung: **05.12.2018**
(21) Anmeldenummer: 11769823.3
(22) Anmeldetag: 29.09.2011
(51) Int. Cl.: C07F 3/02, C08F 4/651, C08F 4/654, C07C 31/30, C08F 4/50

(54) **NIEDRIGVISKOSE, KONZENTRIERTE LÖSUNGEN VON MAGNESIUMKOMPLEXEN FÜR DIE HERSTELLUNG VON POLYMERISATIONSKATALYSATOREN UND VERFAHREN FÜR DEREN HERSTELLUNG**
LOW-VISCOSITY, CONCENTRATED SOLUTIONS OF MAGNESIUM COMPLEXES FOR PRODUCING POLYMERIZATION CATALYSTS AND METHOD FOR PRODUCING THE SAME
SOLUTIONS CONCENTRÉES DE COMPLEXES DE MAGNÉSIUM, DE FAIBLE VISCOSITÉ, POUR LA PRODUCTION DE CATALYSEURS DE POLYMÉRISATION ET PROCÉDÉ DE PRODUCTION CORRESPONDANT

(30) Priorität: 30.09.2010 DE 102010046978
(43) Veröffentlichungstag der Anmeldung: 07.08.2013
(73) Patentinhaber: Albemarle Germany GmbH, 65926 Frankfurt am Main (DE)
(72) Erfinder: WIETELMANN, Ulrich, 61381 Friedrichsdorf (DE); RÖDER, Jens, 68167 Mannheim (DE); EMMEL, Ute, 65929 Frankfurt am Main (DE)
(74) Vertreter: Rottmayer, Hans
(86) Internationale Anmeldenummer: PCT/EP2011/066981
(87) Internationale Veröffentlichungsnummer: WO 2012/041960

(56) Entgegenhaltungen:
- EP-A1- 1 229 054
- EP-A1- 1 862 480

## Beschreibung

Die Erfindung betrifft konzentrierte, niedrigviskose Lösungen von basischen Magnesiumkomplexen in kohlenwasserstoffbasierten Lösungsmitteln sowie ein Verfahren zu deren Herstellung.

Magnesiumalkoxide werden u.a. zur Herstellung geträgerter OlefinPolymerisationskatalysatoren vom Ziegler-Natta - Typ eingesetzt. Dazu werden beispielsweise unlösliche Alkoxide wie z.B. Magnesiumethoxid in Form sphärischer Partikel verwendet, welche durch Reaktion mit Titanchlorid oder einer anderen Titan-Halogenbindungen aufweisenden Verbindung wie Dicyclopentadienyltitandichlorid (Cp₂TiCl₂) in die aktive Form überführt werden, wie in Dokument EP 1031580 beschrieben:

Mg(OEt)₂ + Cp₂TiCl₂ → Mg(OEt)₂₋ₓClₓ + Cp₂TiCl₂₋ₓ(OEt)ₓ

(x = 0 bis 2)

Eine weitere Möglichkeit, geträgerte Ziegler-Natta - Katalysatoren herzustellen besteht darin, von löslichen Magnesiumalkoxiden auszugehen. Während die meisten Magnesiumalkoholate wie z.B. die Mg-Salze des Methanols, Ethanols, Propanols, Isopropanols, tert-Butanols etcetera in aprotischen Lösungsmitteln unlöslich sind, erweisen sich die Mg-Verbindungen primärer Alkohole, die eine Verzweigung in 2-Stellung aufweisen, als löslich in Kohlenwasserstoffen (WO 85/02176). So sollen sich beispielsweise die Magnesiumsalze des 2-Methyl-1-pentanols oder des 2-Ethyl-1-hexanols in Konzentrationen von 1,3 mol/l in Cyclohexan lösen. Auch gemischte Mg-alkoxide, d.h. solche mit zwei verschiedenen Alkoxid-Resten Mg(OR¹)(OR²) können kohlenwasserstoff-löslich sein, wenn der korrespondierende Alkohol R¹OH ein in 2-Stellung verzweigter primärer Alkohol und der korrespondierende Alkohol R²OH ein sekundärer Alkohol ist (WO 85/02176).
Aus solchen Magnesiumalkoholate enthaltenden Lösungen kann in einem ersten Schritt zur Herstellung des MgCl₂-basierten Katalysatorträgers durch Umsetzung mit Carbonsäurehalogeniden eine lösliche Komplexverbindung hergestellt werden. Als Carbonsäurehalogenide werden bevorzugt Dicarbonsäuredihalogenide, besonders bevorzugt α,β-ungesättigte Dicarbonsäurehalogenide, speziell Phthalsäuredichlorid eingesetzt (EP 1229054B1). Die Herstellung einer solchen bevorzugten Komplexlösung, für deren Synthese außer einem Carbonsäurehalogenid keine weitere halogenhaltige Verbindung benutzt wird, ist in EP 1862480A1 beschrieben. Danach wird zunächst durch Umsetzung einer 20%igen Butyloctylmagnesiumlösung in Toluol mit 2 Äquivalenten (eq.) Ethylhexanol lösliches Magnesiumbis(ethylhexoxid) hergestellt, das anschließend mit Phthaloyldichlorid bei 60°C umgesetzt wird. Die Produktlösung enthält bei 100% Ausbeute eine Magnesiumkonzentration von 0,83 mmol/g und das eingesetzte Molverhältnis Phthaloylchlorid zu Magnesiumbis(ethylhexoxid) beträgt 0,40 zu 1.
Nachteilig an diesem Produkt sind die relativ geringe Produktkonzentration sowie die hohe Viskosität der Produktlösungen bei Konzentrationen > 0,9 mmol/g Magnesiumkonzentration.

Die Erfindung hat sich die Aufgabe gestellt ein Produkt anzugeben, das die Nachteile des Stands der Technik vermeidet, d.h. das
- eine Konzentration von mindestens 0,9 mmol/g Magnesium in gelöster Form enthält,
- wenig viskos ist (Viskosität < 500 mPas) und
- bei bis zu 30°C über einen Zeitraum von bis zu 4 Wochen lagerstabil ist.

Die Aufgabe wird dadurch gelöst, dass magnesiumalkoholathaltige Lösungen in einem kohlenwasserstoffbasierten Lösemittel oder Lösemittelgemisch mit einem oder mehreren Carbonsäurehalogeniden umgesetzt werden, wobei die gelöste Magnesiumkonzentration im auf diese Art gebildeten Komplex mindestens 0,9 mmol/g, besonders bevorzugt mindestens 1 mmol/g und besonders bevorzugt mindestens 1,1 mmol/g beträgt. Das Molverhältnis zwischen Carbonsäurehalogenidfunktion und Magnesium beträgt mindestens 0,84 1, besonders bevorzugt mindestens. 0,9 : 1 und höchstens 1,8 : 1. Besonders bevorzugt werden als Carbonsäurehalogenide Dicarbonsäuredichloride, z.B. Phthaloyldichlorid verwendet. Bei solchen bifunktionellen Säurechloriden beträgt das Molverhältnis Dicarbonsäuredichlorid zu Magnesiumalkoholat mindestens 0,42 : 1, bevorzugt mindestens 0,45 :1, besonders bevorzugt mindestens 0,50 :1 und höchstens 0,9 : 1. Es wurde überraschend gefunden, dass bei Überschreitung eines Molverhältnisses von ungefähr 0,9 1 Carbonsäurechloridequivalenten zu Magnesiumalkoholatequivalenten eine drastische Abnahme der Lösungsviskosität stattfindet. Dieser nicht vorhersehbare Effekt hat zur Folge, dass die Produktkonzentration des Komplexes zwischen dem Magnesiumalkoholat und dem Carbonsäurehalogenid deutlich gesteigert werden kann, ohne dass die Viskosität derartig zunimmt, dass die Handhabung des Produktes behindert wird. Insbesondere sind solche erfindungsgemäßen wenig viskosen Produktlösungen sehr gut pumpbar und lagerstabil.
Als Magnesiumalkoholate werden Verbindungen der allgemeinen Formel Mg(OCH₂R¹)₂ verwendet, die sich von in 2-Position verzweigten primären Alkoholen (HOCH₂R¹) ableiten. Der Alkohol HOCH₂R¹ ist besonders bevorzugt ausgewählt aus der Gruppe bestehend aus: Isobutanol, 2-Methyl-1-pentanol, 2-Ethyl-1-butanol, 2-Ethyl-1-pentanol, 2-Ethyl-4-methyl-1-pentanol, 2-Propyl-1-heptanol, 2-Methyl-1-hexanol, 2-Ethylhexanol und 2-Ethyl-5-methyl-1-octanol oder einer beliebigen Mischung aus mindestens zwei der aufgeführten Alkohole.

Das kohlenwasserstoffbasierte Lösungsmittel ist oder enthält entweder einen oder mehrere aliphatische Verbindungen mit 5 bis 20 C-Atomen, wobei sowohl zyklische als auch offenkettige Verbindungen möglich sind. Bevorzugt sind: Cyclohexan, Methylcyclohexan, Hexan, Heptan, Octan, Nonan, Dekan, Dodecan, Dekalin sowie handelsübliche Siedeschnitte (Benzinfraktionen).
Das aprotische Lösungsmittel kann weiterhin Aromaten enthalten oder daraus bestehen. Bevorzugt sind: Benzol, Toluol, Ethylbenzol, Xylole sowie Cumol.
In einer weiteren Ausführungsform der Erfindung kann die erfindungsgemäße magnesiumhaltige Komplexlösung noch polare, aprotische Lösungsmittel wie z.B. Ether oder tertiäre Amine enthalten.

Die erfindungsgemäßen konzentrierten Umsetzungsprodukte aus Magnesiumalkoholaten und Carbonsäurechloriden weisen bei Raumtemperatur im Allgemeinen eine dynamische Lösungsviskosität von maximal 500 mPas, bevorzugt maximal 100 mPas und besonders bevorzugt von maximal 50 mPas, gemessen mit einem Rotationsviskosimeter (z.B. von Firma Brookfield) auf.

Die Herstellung der erfindungsgemäßen konzentrierten Komplexlösung erfolgt durch Umsetzung der Lösung eines in 2-Position verzweigten Mg-alkoholates, beispielsweise Magnesium-bis(ethylhexoxid) mit einem Carbonsäurehalogenid in einem kohlenwasserstoffbasierten Lösungsmittel bei Temperaturen zwischen 0°C und 120°C, bevorzugt 20°C und 100°C. Das Reaktionsgefäß und die verwendeten Einsatzstoffe müssen trocken und luftfrei sein, d.h. inertisiert sein. Die Reaktion erfolgt unter Schutzgasatmosphäre, beispielsweise unter Stickstoff oder Argon. Bevorzugt wird die Alkoholatlösung vorgelegt und das Carbonsäurehalogenid zudosiert. Um Viskositätsänderungen verfolgen zu können, wird eine in-line Viskositätsmessung vorgenommen. Ein solches Gerät liefert beispielsweise Firma F5, Wunstorf, Niedersachsen.

Es wurde eine wenig viskose 33,7 %ige Magnesium-bis(ethylhexoxid)-Lösung (1,19 mmol/g Mg, Viskosität ungefähr 11 mPas) in einem Lösemittelgemisch aus 90% Toluol und 10% Heptan vorgelegt und auf 60°C erwärmt. Dann wurden zunächst 0,40 eq Phthaloyldichlorid (entspricht Dosierung = 100%) zugegeben. Dabei stieg die Viskosität sehr stark auf rund 180 mPas, gemessen mit dem Gerät der Firma F5, an. Diese Viskosität entspricht einer mit einem Rotationsviskosimeter (z.B. von Firma Brookfield) gemessenen dynamischen Viskosität von einigen 1000 mPas. Nach ca. 40-minütigem Rühren bei 60°C wurde weiteres Phthaloyldichlorid ("PDC") zugegeben. Nach Zugabe von weiteren 0,07 eq. PDC, also insgesamt 0,47 eq., verminderte sich die mit dem Gerät von Firma F5 gemessene Viskosität praktisch schlagartig von ungefähr 115 auf 20 mPas.

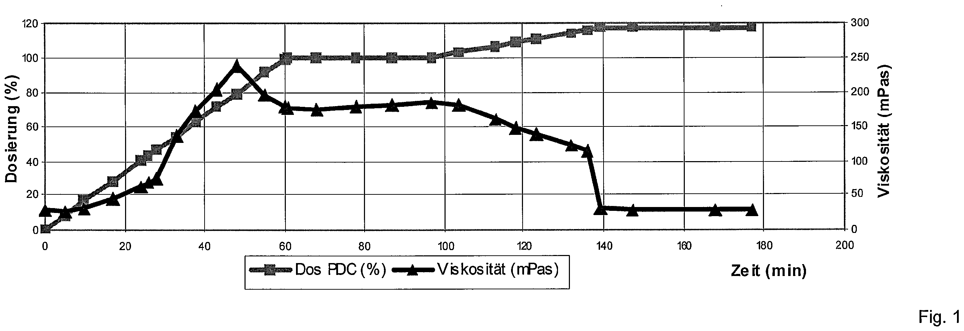

Figur 1 zeigt den typischen Verlauf der Viskosität bei einer solchen Umsetzung.

Die Erfindung wird anhand der nachfolgenden zwei Beispielen und zwei Vergleichsbeispielen näher erläutert:

### Beispiele

Alle Umsetzungen wurden in trockenen, mit Argon inertisierten Glasapparaturen vorgenommen. Viskositätsmessungen wurden bei Raumtemperatur mit einem Rotationsviskosimeter der Firma Brookfield in einer Ar-gefüllten Handschuhbox durchgeführt.

### Vergleichsbeispiel 1

In einem 0,5-L-Doppelmantelreaktor mit wandgängigem Rührorgan wurden 544 g Magnesiumbis(ethylhexoxid)-Lösung in Toluol, die eine Mg-Konzentration von 1,23 mmol/g (ICP-Analyse) und eine Viskosität von 560 mPas aufwies, vorgelegt und auf 60°C erwärmt. Dann wurden 54,3 g (entspricht 0,40 eq., bezogen auf die vorgelegte Mg-alkoholatmenge) innerhalb von 1 h zugetropft. Die Lösung wurde dabei sehr viskos.
Nach 20-minütigem Rühren bei 60°C wurde die Lösung auf RT abgekühlt.
Auswaage: 583 g Lösung
Mg-Konzentration: 1,12 mmol/g
Viskosität: 3200 mPas

### Vergleichsbeispiel 2

In einem 0,5-L-Doppelmantelreaktor mit wandgängigem Rührorgan wurden 532 g Magnesiumbis(ethylhexoxid)-Lösung in einem Lösungsmittelgemisch aus 70% Toluol und 30% Heptan, die eine Konzentration von 1,24 mmol/g (ICP-Analyse) und eine Viskosität von 500 mPas aufwies, vorgelegt und auf 60°C erwärmt. Dann wurden 53,5 g (entspricht 0,40 eq., bezogen auf die vorgelegte Mg-alkoholatmenge) innerhalb von 1 h zugetropft. Die Lösung wurde dabei extrem viskos.
Nach 20-minütigem Rühren bei 60°C wurde die Lösung auf RT abgekühlt.
Auswaage: 552 g Lösung
Mg-Konzentration: 1,15 mmol/g
Viskosität: 6200 mPas

### Beispiel 1

In der in Vergleichsbeispiel 1 beschriebenen Apparatur wurden 432 g Magnesiumbis(ethylhexoxid)-Lösung in einem Lösungsmittelgemisch aus 70% Toluol und 30% Heptan mit einer Mg-Konzentration von 1,24 mmol/g (ICP-Analyse) und einer Viskosität von 500 mPas vorgelegt und auf 60°C erwärmt. Dann wurden 57,6 g PDC (entspricht 0,53 eq., bezogen auf die vorgelegte Mg-alkoholatmenge) innerhalb von 1 h zugetropft. Die Lösung wurde bis zur Dosierung von etwa 0,5 eq. deutlich viskoser, kurz vor Dosierende nahm die Viskosität aber deutlich ab.
Nach 20-minütigem Rühren bei 60°C wurde die Lösung auf RT abgekühlt.
Auswaage: 462 g Lösung
Mg-Konzentration: 1,15 mmol/g
Viskosität: 18 mPas
Lagerstabilität: bei Temperaturen von 0°C, 10°C und ca. 25°C keine Veränderungen über einen Zeitraum von 4 Wochen

### Beispiel 2

In der in Vergleichsbeispiel 1 beschriebenen Apparatur wurden 432 g Magnesiumbis(ethylhexoxid)-Lösung in einem Lösungsmittelgemisch aus 90% Toluol und 10% Heptan mit einer Mg-Konzentration von 1,49 mmol/g (ICP-Analyse) und einer Viskosität von 1500 mPas vorgelegt und auf 60°C erwärmt. Dann wurden 61,5 g PDC (entspricht 0,47 eq., bezogen auf die vorgelegte Mg-alkoholatmenge) innerhalb von 1 h zugetropft. Die Lösung wurde bis zur Dosierung von etwa 0,4 eq. deutlich viskoser, kurz vor Dosierende nahm die Viskosität aber deutlich ab.
Nach 20-minütigem Rühren bei 60°C wurde die Lösung auf RT abgekühlt.
Auswaage: 415 g Lösung
Mg-Konzentration: 1,31 mmol/g
Viskosität: 30 mPas
Lagerstabilität: bei Temperaturen von 0°C, 10°C und ca. 25°C keine Veränderungen über einen Zeitraum von 4 Wochen

Vergleichsbeispiel 1 zeigt, dass eine konzentrierte Mg-Komplexlösung in reinem Toluol bei einem PDC-Einsatz von 0,40 eq. pro mol Mg-alkoholat eine sehr hohe Viskosität von 3200 mPas aufweist. Wird statt Toluol ein Gemisch aus 70% Toluol und 30% Heptan gewählt, so wird beim selben PDC-Einsatz von 0,40 eq. eine noch höhere Viskosität von 6200 mPas beobachtet (Vergleichsbeispiel 2).
Dagegen resultiert bei der identischen Mg-alkoholatlösung wie in Vergleichsbeispiel 2, aber Erhöhung der PDC-Stöchiometrie auf 0,53 eq. eine dünnflüssige Mg-Komplexlösung (18 mPas, Beispiel 1). Beispiel 2 zeigt, dass sogar eine noch höhere Mg-Komplexkonzentration von 1,31 mmol/g dann wenig viskos ist, wenn 0,47 eq. PDC pro eq. eingesetztem Mg-alkoxid verwendet werden.

## Patentansprüche

1. Lösungen enthaltend die Umsetzungsprodukte von Magnesiumalkoxiden mit Carbonsäurehalogeniden in kohlenwasserstoffbasierten Lösungsmitteln, **dadurch gekennzeichnet, dass** die gelöste Magnesiumkonzentration mindestens 0,9 mmol/g, besonders bevorzugt mindestens 1 mmol/g und besonders bevorzugt mindestens 1,1 mmol/g beträgt und das Molverhältnis zwischen Carbonsäurehalogenidfunktionen und Magnesium mindestens 0,84 : 1, bevorzugt mindestens 0,9 : 1 und höchstens 1,8 : 1 beträgt.

2. Lösungen nach Anspruch 1, **dadurch gekennzeichnet, dass** sie bei Raumtemperatur eine mit einem Rotationsviskosimeter der Firma Brookfield gemessene dynamische Lösungsviskosität von maximal 500 mPas, bevorzugt maximal 100 mPas und besonders bevorzugt von maximal 50 mPas aufweisen.

3. Lösungen nach Anspruch 1 oder 2, **dadurch gekennzeichnet, dass** sie aus Magnesiumalkoxiden der allgemeinen Formel Mg(OCH₂R¹)₂ hergestellt werden, die sich von in 2-Position verzweigten primären Alkoholen (HOCH₂R¹) ableiten.

4. Lösungen nach einem oder mehreren der Ansprüche 1 bis 3, **dadurch gekennzeichnet, dass** der Alkohol HOCH₂R¹ besonders bevorzugt ausgewählt ist aus der Gruppe bestehend aus: Isobutanol, 2-Methyl-1-pentanol, 2-Ethyl-1-butanol, 2-Ethyl-1-pentanol, 2-Ethyl-4-methyl-1-pentanol, 2-Propyl-1-heptanol, 2-Methyl-1-hexanol, 2-Ethylhexanol und 2-Ethyl-5-methyl-1-octanol oder einer beliebigen Mischung aus mindestens zwei der aufgeführten Alkohole.

5. Lösungen nach einem oder mehreren der Ansprüche 1 bis 4, **dadurch gekennzeichnet, dass** als Carbonsäurehalogenide bevorzugt Dicarbonsäuredichloride, vorzugsweise Phthaloyldichlorid ausgewählt wird.

6. Lösungen nach einem oder mehreren der Ansprüche 1 bis 5, **dadurch gekennzeichnet, dass** beim Einsatz von Dicarbonsäuredichloriden das Molverhältnis Dicarbonsäuredichlorid zu Magnesiumalkoholat mindestens 0,42 : 1, bevorzugt mindestens 0,45 : 1, besonders bevorzugt mindestens 0,50 : 1 und höchstens 0,9 : 1 beträgt.

7. Lösungen nach einem oder mehreren der Ansprüche 1 bis 6, **dadurch gekennzeichnet, dass** das kohlenwasserstoffbasierte Lösungsmittel entweder eine oder mehrere aliphatische Verbindungen mit 5 bis 20 C-Atomen, wobei sowohl zyklische als auch offenkettige Verbindungen möglich sind, beispielsweise Cyclohexan, Methylcyclohexan, Hexan, Heptan, Octan, Nonan, Dekan, Dodecan, Dekalin sowie handelsübliche Siedeschnitte vorzugsweise Benzinfraktionen enthält oder daraus besteht.

8. Lösungen nach einem oder mehreren der Ansprüche 1 bis 7, **dadurch gekennzeichnet, dass** das kohlenwasserstoffbasierte Lösemittel Aromaten, insbesondere Benzol, Toluol, Ethylbenzol, Xylole sowie Cumol enthält oder daraus besteht.

9. Lösungen nach einem oder mehreren der Ansprüche 1 bis 8, **dadurch gekennzeichnet, dass** die erfindungsgemäßen magnesiumhaltigen Komplexlösungen noch polare, aprotische Lösungsmittel vorzugsweise Ether oder tertiäre Amine enthalten.

## Claims

1. Solutions, containing the reaction products of magnesium alkoxides with carboxylic acid halides in hydrocarbon-based solvents, **characterized in that** the dissolved magnesium concentration is at least 0.9 mmol/g, particularly preferably at least 1 mmol/g and particularly preferably at least 1.1 mmol/g and the molar ratio between carboxylic acid halide functions and magnesium is at least 0.84:1, preferably at least 0.9:1 and at most 1.8:1.

2. Solutions according to claim 1, **characterized in that** they have a dynamic solution viscosity of at most 500 mPas, preferably at most 100 mPas and particularly preferably at most 50 mPas at room temperature, as measured with a rotational viscosimeter from the company Brookfield.

3. Solutions according to claim 1 or 2, **characterized in that** they are produced from magnesium alkoxides of the general formula Mg(OCH₂R¹)₂ which are derived from primary alcohols branched at position 2 (HOCH₂R¹).

4. Solutions according to one or more of claims 1 to 3, **characterized in that** the alcohol HOCH₂R¹ is particularly preferably selected from the group consisting of: isobutanol, 2-methyl-1-pentanol, 2-ethyl-1-butanol, 2-ethyl-1-pentanol, 2-ethyl-4-methyl-1-pentanol, 2-propyl-1-heptanol, 2-methyl-1-hexanol, 2-ethylhexanol and 2-ethyl-5-methyl-1-octanol or any mixture of at least two of the stated alcohols.

5. Solutions according to one or more of claims 1 to 4, **characterized in that** the selected carboxylic acid halides are preferably dicarboxylic acid dichlorides, preferably phthaloyl dichloride.

6. Solutions according to one or more of claims 1 to 5, **characterized in that**, when using dicarboxylic acid dichlorides, the molar ratio of dicarboxylic acid dichloride to magnesium alcoholate is at least 0.42:1, preferably at least 0.45:1, particularly preferably at least 0.50:1 and at most 0.9:1.

7. Solutions according to one or more of claims 1 to 6, **characterized in that** the hydrocarbon-based solvent contains either one or more aliphatic compounds from 5 to 20 C-atoms, wherein both cyclic and open-chain compounds are possible, such as cyclohexane, methylcyclohexane, hexane, heptane, octane, nonane, decane, dodecane, decaline, as well as conventional boiling fractions, preferably gasoline fractions, or consists thereof.

8. Solutions according to one or more of claims 1 to 7, **characterized in that** the hydrocarbon-based solvent contains aromatics, in particular benzene, toluene, ethylbenzene, xylenes and cumene, or consists thereof.

9. Solutions according to one or more of claims 1 to 8, **characterized in that** the inventive complex solutions containing magnesium also contain polar, aprotic solvents, preferably ether or tertiary amines.

## Revendications

1. Solutions contenant les produits réactionnels d'alcoxydes de magnésium avec des halogénures d'acide carboxylique dans des solvants à base d'hydrocarbure, **caractérisées en ce que** la concentration de magnésium à l'état dissous est d'au moins 0,9 mmole/g, de manière particulièrement préférée d'au moins 1 mmole/g et de manière particulièrement préférée d'au moins 1,1 mmole/g, et le rapport molaire entre des fonctions halogénure d'acide carboxylique et magnésium est d'au moins 0,84 : 1, de préférence d'au moins 0,9 : 1 et au plus de 1,8 : 1.

2. Solutions selon la revendication 1, **caractérisées en ce qu'**elles présentent, à température ambiante, une viscosité de solution dynamique mesurée avec un viscosimètre de rotation de la société Brookfield au maximum de 500 mPas, de préférence au maximum de 100 mPas et de manière particulièrement préférée au maximum de 50 mPas.

3. Solutions selon la revendication 1 ou 2, **caractérisées en ce qu'**elles sont produites à partir d'alcoxydes de magnésium de formule générale Mg(OCH₂R¹)₂ qui proviennent d'alcools primaires ramifiés en position 2 (HOCH₂R¹).

4. Solutions selon une ou plusieurs des revendications 1 à 3, **caractérisées en ce que** l'alcool HOCH₂R¹ est choisi de manière particulièrement préférée dans le groupe consistant en : isobutanol, 2-méthyl-1-pentanol, 2-éthyl-1-butanol, 2-éthyl-1-pentanol, 2-éthyl-4-méthyl-1-pentanol, 2-propyl-1-heptanol, 2-méthyl-1-hexanol, 2-éthylhexanol et 2-éthyl-5-méthyl-1-octanol ou en un mélange quelconque d'au moins deux des alcools mentionnés.

5. Solutions selon une ou plusieurs des revendications 1 à 4, **caractérisées en ce que** l'on choisit comme halogénures d'acide carboxylique de préférence des dichlorures d'acide dicarboxylique, de préférence du dichlorure phtaloylique.

6. Solutions selon une ou plusieurs des revendications 1 à 5, **caractérisées en ce que**, lors de l'utilisation de dichlorures d'acide dicarboxylique, le rapport molaire de dichlorure d'acide dicarboxylique à l'alcoolate de magnésium est d'au moins 0,42 : 1, de préférence d'au moins 0,45 : 1, de manière particulièrement préférée d'au moins 0,50 : 1 et au plus de 0,9 : 1.

7. Solutions selon une ou plusieurs des revendications 1 à 6, **caractérisées en ce que** le solvant à base d'hydrocarbure contient ou consiste en un ou plusieurs composés aliphatiques comportant 5 à 20 atomes de C, dans lesquelles des composés cycliques ou également à chaîne ouverte sont utilisables, par exemple, cyclohexane, méthylcyclohexane, hexane, heptane, octane, nonane, décane, dodécane, décaline ainsi que des fractions d'ébullition usuelles, de préférence des fractions d'essence.

8. Solutions selon une ou plusieurs des revendications 1 à 7, **caractérisées en ce que** le solvant à base d'hydrocarbure contient ou consiste en des composés aromatiques, en particulier, benzène, toluène, éthylbenzène, xylène et cumène.

9. Solutions selon une ou plusieurs des revendications 1 à 8, **caractérisées en ce que** les solutions complexes contenant du magnésium selon l'invention contiennent encore des solvants polaires, aprotiques, de préférence des éthers ou des amines tertiaires.
